# EUROPÄISCHE PATENTSCHRIFT

(11) **EP 3 141 412 B1**
(45) Veröffentlichungstag und Bekanntmachung des Hinweises auf die Patenterteilung: **15.01.2020**
(21) Anmeldenummer: 16179968.9
(22) Anmeldetag: 18.07.2016
(51) Int. Cl.: B60J 10/16, F16J 15/02, E06B 3/62

(54) **DICHTUNGSSTRANG**
SEALING GASKET
BANDE D'ÉTANCHÉITÉ

(30) Priorität: 11.09.2015 DE 202015104830 U
(43) Veröffentlichungstag der Anmeldung: 15.03.2017
(73) Patentinhaber: Semperit AG Holding, 1031 Wien (AT)
(72) Erfinder: Schwaiberger, Gerhard, 94469 Deggendorf (DE); Kilger, Albert, 94469 Deggendorf (DE)
(74) Vertreter: Müller Schupfner & Partner Patent- und Rechtsanwaltspartnerschaft mbB

(56) Entgegenhaltungen:
- EP-A1- 0 836 962
- EP-A1- 1 136 297
- EP-A2- 2 369 116
- DE-A1-102008 034 347
- DE-U1- 9 401 563

## Beschreibung

Die vorliegende Erfindung betrifft einen Dichtungsstrang, insbesondere zum Einsatz als Fenster- oder Türdichtung.

Dichtungsstränge sind aus dem Stand der Technik bereits hinlänglich bekannt. Dabei wurden in der Vergangenheit immer wieder Verbesserungen an der Materialbeschaffenheit sowie an der Geometrie der Dichtungsstränge vorgenommen, um die Abdichtungswirkung, die Lebensdauer, die Verarbeitbarkeit und die Montierbarkeit der Dichtungsstränge zu verbessern. Dennoch sind bei den derzeit im Stand der Technik bekannten Dichtungssträngen nach wie vor Nachteile vorhanden, insbesondere wenn verschiedene Materialien in einem Dichtungsstrang verwendet werden, um einerseits eine hohe Witterungsbeständigkeit des Dichtungsstranges und andererseits eine besonders hohe Wärmedämmung des Dichtungsstranges zu erreichen. So ist insbesondere im Kontaktbereich der beiden Materialbereiche oft eine Beschädigung des Dichtungsstranges zu erwarten, da die Dichtungsstränge im Einsatz durch periodische oder schwingende Kräfte belastet werden.

Aus der EP 2 369 116 ist ein Dichtungsprofil zur Einfassung von Flächenelementen, wie Isolierglasscheiben an einem Rahmen, bekannt, welches strangförmig ausgebildet ist und einen an einem Profil festlegbaren Montagebereich, der als Haltefuß oder Halteausnehmung ausgebildet ist, aufweist. Zudem umfasst das Dichtungsprofil an das Flächenelement anlegbaren Dichtwulst und wenigstens eine Dichtlippe. Dabei bilden zumindest der Montagebereich und zumindest ein Teil des Dichtwulstes einen Bereich mit einer ersten Materialbeschaffenheit, an den sich direkt ein Bereich mit einer zweiten Materialbeschaffenheit anschließt. Die EP 1 136 297 betrifft eine Verglasungsdichtung mit einem Haltefuss zur Verankerung der Dichtung in einer Haltenut, mit einer Dichtlippe und einem Dichtwulst, wobei der Dichtwulst einen Schaumkern aufweist.

Die DE 9 401 563 offenbart ein verstärktes Kunststoff-Formteil, das wenigstens zwei spritzgegossene Komponentenlagen umfasst, von denen eine Komponentenlage als faserverstärkte, längen- und formstabilisierende vorzugsweise elastisch rückfedernde Verstärkungslage aus hartem Kunststoff ausgebildet ist, und von denen eine weitere Komponentenlage faserfrei ausgebildet ist.

Aus der DE 10 2008 034347 A1 ist ein Dichtungsstrang gemäß dem Oberbegriff des Anspruchs 1 bekannt.

Die vorliegende Erfindung macht es sich zur Aufgabe, einen Dichtungsstrang bereitzustellen, der insbesondere das Problem der im Kontaktbereich zweier Materialbereiche auftretenden Materialschädigungen vermeidet. Dabei ist es weiterhin eine Aufgabe der vorliegenden Erfindung, verschiedene Materialien besonders angepasst an den jeweiligen Einsatzzweck in einem Dichtungsstrang einsetzen zu können.

Diese Aufgabe wird gelöst mit einem Dichtungsstrang gemäß Anspruch 1. Weitere Vorteile und Merkmale der vorliegenden Erfindung ergeben sich aus den abhängigen Ansprüchen.

Erfindungsgemäß erstreckt sich der Dichtungsstrang mit einem entlang einer Profilbahn im Wesentlichen gleich bleibenden Querschnitt, wobei der Dichtungsstrang in einer quer zur Profilbahn liegenden Schnittebene folgendes aufweist: a) einen ersten Materialbereich mit einem Halteabschnitt zum Eingriff mit einem Rahmen und b) einen zweiten Materialbereich, welcher an der dem Halteabschnitt gegenüberliegenden Seite des ersten Materialbereichs mit diesem verbunden ist, wobei zwischen dem ersten Materialbereich und dem zweiten Materialbereich eine Verbindungslinie vorgesehen ist, wobei die Verbindungslinie einen Kraftübertragungsabschnitt aufweist, in welchem sie im Wesentlichen geradlinig verläuft. Der Dichtungsstrang ist mit anderen Worten ein strangförmiger Körper, welcher seine größte Erstreckung längs oder parallel zu einer Profilbahn aufweist. Entlang dieser Erstreckung weist der Dichtungsstrahl vorzugsweise einen konstanten Querschnitt, bzw. eine konstante Querschnittsverteilung des ersten Materialbereichs und des zweiten Materialbereichs, auf. Die Formulierung in "im Wesentlichen gleichbleibender Querschnitt" beinhaltet dabei kleinere lokale Abweichungen, wie Einkerbungen oder Einschnitte, welche in periodischen Abständen längs der Profilbahn an dem Dichtungsstrang eingebracht sein können. Diese dienen insbesondere verbesserten Verlegbarkeit des Dichtungsstrangs in Ecken. Der erste Materialbereich weist dabei einen Halteabschnitt zum Eingriff mit einem Rahmen auf, wobei der Halteabschnitt vorzugsweise formschlüssig in eine entsprechend korrespondierende Geometrie wie beispielsweise einen Schlitz oder eine Fuge des Rahmens eingreift. Dem Halteabschnitt gegenüberliegend ist am ersten Materialbereich der zweite Materialbereich festgelegt, wobei zwischen dem ersten Materialbereich und dem zweiten Materialbereich eine Verbindungslinie ausgebildet ist. Die Verbindungslinie weist einen Kraftübertragungsabschnitt auf, in welchem sich die Verbindungslinie im Wesentlichen geradlinig erstreckt. Als Kraftübertragungsabschnitt wird dabei vorzugsweise der Abschnitt der Verbindungslinie angesehen, über welchen die Kraft vom Halteabschnitt in den zweiten Materialbereich mittelbar durch den ersten Materialbereich übertragen wird. Die geradlinige Erstreckung der Verbindungslinie im Kraftübertragungsabschnitt weist im Sinne der vorliegenden Erfindung den großen Vorteil auf, dass Spannungsspitzen im Material sowohl des ersten Materialbereiches als auch des zweiten Materialbereiches und insbesondere im Kontaktbereich der beiden Materialbereiche vermieden werden können. Insbesondere können Schubspannungen längs der Verbindungslinie vermindert werden. Auf diese Weise kann insbesondere eine Anpresskraft eines Fensters auf den zweiten Materialbereich besonders schonend über die Verbindungslinie in den ersten Materialbereich und über den Halteabschnitt in den Rahmen des Fensters oder der Tür abgeleitet werden. Der Term "im Wesentlichen geradlinig" bedeutet im vorliegenden Fall, dass die Verbindungslinie im Kraftübertragungsabschnitt insbesondere an dessen distalen Enden durchaus kleine Rundungen aufweisen kann, insbesondere um besonders spannungsarme Übergange zu den benachbarten Bereichen des der Verbindungslinie zu erreichen. Der überwiegende Teil des Kraftübertragungsabschnitts, vorzugsweise 90 bis 95% der Erstreckung des Kraftübertragungsabschnitts ist im Sinne der vorliegenden Erfindung geradlinig ausgebildet. Bei der vorliegenden Beschreibung ist zu beachten, dass sämtliche geometrische Merkmale des ersten und des zweiten Materialbereiches sowie der Verbindungslinie und des Kraftübertragungsabschnitts für eine Schnittansicht des Dichtungsstrangs quer zur Profilbahn definiert sind.

Bevorzugt weist der Kraftübertragungsabschnitt eine Erstreckung auf, die zumindest gleich der Erstreckung des Halteabschnitts parallel zum Kraftübertragungsabschnitt ist. Vorzugsweise ist die Erstreckung des Kraftübertragungsabschnitts gleich oder größer als die Breite des Halteabschnitts, parallel zu der Erstreckung des Kraftübertragungsabschnitts. Auf diese Weise lassen sich sämtliche vom Halteabschnitt in das Material des ersten Materialbereiches übertragenen Kräfte den Kraftübertragungsabschnitt in das Material des zweiten Materialbereiches einleiten. Die Entstehung von lokalen Spannungsspitzen kann auf diese Weise effektiv vermindert werden und die Lebensdauer des Dichtungsstranges erhöht werden. Vorteilhafterweise ist der Halteabschnitt im Wesentlichen symmetrisch zu einer Symmetrielinie ausgebildet, wobei der Kraftübertragungsabschnitt derart angeordnet ist, dass die Symmetrielinie den Kraftübertragungsabschnitt halbiert. In einer ersten bevorzugten Ausführungsform ist der Halteabschnitt pfeilförmig ausgebildet, wobei die pfeilförmige Geometrie des Halteabschnitts in eine entsprechende Hinterschneidung an einem Rahmen eingreifen und einen formschlüssigen Eingriff bilden kann. Die Symmetrielinie, zu der der Halteabschnitt im Wesentlichen symmetrisch ausgebildet ist, teilt dabei mit Vorteil den Kraftübertragungsabschnitt in zwei gleiche Hälften. Auf diese Weise kann gewährleistet werden, dass die vom Halteabschnitt übertragene Kraft zu gleichen Teilen auf der rechten und der linken Seite des Kraftübertragungsabschnitts in das Material des zweiten Materialbereiches übertragen wird. Es kann auf diese Weise eine gleichmäßige Verformung in der Verbindungszone zwischen dem ersten Materialbereich und dem zweiten Materialbereich erreicht werden.

Weiterhin bevorzugt erstreckt sich die Verbindungslinie auch außerhalb des Kraftübertragungsabschnitts geradlinig. Diese Ausführungsform ermöglicht zum einen eine sehr einfache Herstellung des Dichtungsstranges, da die beiden Materialbereiche eine im Wesentlichen geradlinige Verbindungsgeometrie miteinander aufweisen und die entsprechend zum Extrudieren des Dichtungsstranges erforderlichen Matrizen eine sehr einfach Geometrie aufweisen können. Weiterhin bevorzugt ergeben sich in der Verbindungszone entlang der Verbindungslinie zwischen dem ersten und dem zweiten Materialbereich kaum oder nur sehr geringe Schubspannungen, welche wiederrum ein Auseinanderreißen des ersten Materialbereiches und des zweiten Materialbereiches verursachen könnten. Es versteht sich, dass diese Ausführungsform jedoch nur dann geeignet ist, wenn das Material des ersten Materialbereiches den zweiten Materialbereich nicht bereichsweise umgeben soll.

Besonders bevorzugt ist es, dass die gesamte Verbindungslinie im Wesentlichen geradlinig verläuft. "Im Wesentlichen geradlinig" bedeutet im vorliegenden Fall, dass an den Rändern bzw. an den distalen Enden der Verbindungslinie kleinere Rundungen vorgesehen sein können, insbesondere um allmähliche Materialübergänge zwischen dem ersten Materialbereich und dem zweiten Materialbereich zu gewährleisten. Auf diese Weise kann die Herstellung des Dichtungsstranges, beispielsweise durch ein Extrusions- oder Koextrusionsverfahren, vereinfacht werden.

Erfindungsgemäß ist der zweite Materialbereich aus Moosgummi ausgebildet. Moosgummi zeichnet sich durch seine vorteilhaften Wärmedämmungseigenschaften aus. Besonders bevorzugt ist es, dass der gesamte zweite Materialbereich aus Moosgummi ausgebildet ist. Moosgummi verbessert die Dichtungseigenschaften des Dichtungsstranges erheblich. Erfindungsgemäß weist der Moosgummi eine Dichte von 0,3 bis 1,5 g/cm³, bevorzugt von 0,4 bis 0,9 g/cm³ auf. Im Bereich dieser Dichte hat sich im Rahmen der vorliegenden Erfindung gezeigt, dass eine sehr gute Wärmedämmung bei gleichzeitig ausreichend hoher Widerstandsfähigkeit gegen physikalische Einflüsse, wie Stöße, Schwingungen und Temperaturunterschiede, erreichbar ist.

Erfindungsgemäß ist der erste Materialbereich aus einem Material höherer Festigkeit ausgebildet als der zweite Materialbereich. Insbesondere bevorzugt ist der zweite Materialbereich aus geschäumtem Material wie Moosgummi ausgebildet und der erste Materialbereich aus ungeschäumtem Material, welches zum einen eine bessere Fixierung des Dichtungsstranges an dem Rahmen erlaubt und zum anderen eine bessere Anpressung des zweiten Materialbereiches an eine Glasscheibe oder eine Fensterscheibe oder eine ähnliche glatte Fläche erlaubt. Mit Vorteil ist die mittlere Zugfestigkeit des Materials des ersten Materialbereiches ein 2 bis 10-faches der mittleren Zugfestigkeit des Materials des zweiten Materialbereiches. Erfindungsgemäß ist ein Verhältnis der Zugfestigkeit des ersten Materialbereiches zur Zugfestigkeit des zweiten Materialbereiches von circa 4 bis 6. Durch ein Verhältnis von 2 - 10 der Zugfestigkeit der beiden Materialbereiche zueinander wird die Dichtungswirkung des Dichtungsstrangs verbessert und gleichzeitig die Festigkeit des Dichtungsstranges zur Festlegung zwischen zwei Teilen eines Fensters angepasst. Durch des entsprechende Verhältnisses von 4 bis 6 lässt sich eine besonders günstige Kraftverteilung der Anpressung des zweiten Materialbereiches durch den ersten Materialbereich erreichen, wobei der Dichtungsstrang mit Vorteil besonders sicher an einem Rahmen festlegbar ist und auch außerhalb des Halteabschnitts eine vorteilhafte Abstützung an dem Rahmen gewährleisten kann. Weiterhin bevorzugt ist das Rückstellvermögen des Materials des ersten Materialbereiches ein ca. 1,5- bis 3-faches des Rückstellvermögens des zweiten Materialbereiches. Das bevorzugte Verhältnis des Rückstellvermögens gewährleistet, dass der erste Materialbereich, welcher im Einsatz die höheren, oft auch schwankenden Kräfte aufnehmen muss, die gleiche Lebensdauer erreicht wie der zweite Materialbereich. Somit kann die Verlässlichkeit des Dichtungsstranges insgesamt gesteigert werden.

Besonders bevorzugt ist der erste Materialbereich aus einem EPDM-Material hergestellt. EPDM zeichnet sich durch seine günstige Verarbeitbarkeit und geringe Materialkosten aus. Gleichzeitig ist eine ausreichende Witterungsbeständigkeit und Dauerelastizität bei EPDM als vorteilhafte Eigenschaft für einen Dichtungsstrang im Sinne der vorliegenden Erfindung zu nennen.

Weiterhin bevorzugt ist am zweiten Materialbereich eine Dichtlippe ausgebildet, wobei die Dichtlippe von dem restlichen Material des zweiten Materialbereiches absteht. Die Dichtlippe ist vorzugsweise ein sich im Querschnitt des Dichtstranges gesehen länglich erstreckender Vorsprung am zweiten Materialbereich und dient insbesondere bevorzugt der Erhöhung der Dichtwirkung des Dichtungsstranges im zweiten Materialbereich. Insbesondere bevorzugt ist die Dichtlippe dabei dafür ausgelegt, mit an den Halteabschnitt angrenzenden Teilen oder Abschnitten des Rahmens in Eingriff zu gelangen, um zusätzliche Wärmebrücken zwischen der Glasscheibe und dem Rahmen zu unterbrechen.

In einer bevorzugten Ausführungsform weist die Dichtlippe ihre überwiegende Erstreckung quer zur Symmetrielinie auf. Als "überwiegende Erstreckung" wird im vorliegenden Zusammenhang definiert, dass die Erstreckung der Dichtlippe quer zur Symmetrielinie zumindest ein 2-faches der Erstreckung der Dichtlippe in der quer zu dieser Haupterstreckung liegenden Richtung ist.

Besonders bevorzugt ist die Erstreckung der Dichtlippe quer zur Symmetrielinie ein 2- bis 10-faches der jeweils anderen Erstreckungsrichtungen der Dichtlippe. Es versteht sich, dass auch diese geometrische Eigenschaft des Dichtungsstranges in der Schnittebene quer zur Profilbahn definiert ist, da selbstverständlich die Erstreckung der Dichtlippe längs der Profilbahn die größte Erstreckung wäre. In der Schnittebene ist definiert, dass die Dichtlippe ihre maximale und vorzugsweise eine 10-fach größere Erstreckung quer zur Symmetrielinie aufweist als in ihren jeweils anderen Erstreckungsrichtungen. Durch diese Eigenschaft ist die Dichtlippe in der Lage, auch große Wärmebrücken zwischen einem Rahmen und einem Fenster oder einer Tür zu unterbrechen und somit zur Dichtungswirkung des Dichtungsstranges einen großen Beitrag zu leisten.

Besonders bevorzugt ist eine Vielzahl von Dichtungslippen am ersten Materialbereich und/oder am zweiten Materialbereich ausgebildet. Durch mehrere Dichtlippen kann der Dichtungsstrang insbesondere zur Unterbrechung verschiedener Wärmebrücken im Bereich zwischen einem Rahmen und einer Fensterscheibe optimiert werden. Dabei erstrecken sich die Dichtungslippen vorzugsweise quer zur Symmetrielinie. Besonders bevorzugt sind an zwei gegenüberliegenden Seiten des zweiten Materialbereiches Dichtungslippen ausgebildet, die sich jeweils im Wesentlichen entgegengesetzt zueinander erstrecken.

Weiterhin bevorzugt weist der erste Materialbereich eine Aussparung auf. Die Aussparung ist vorzugsweise mit Luft oder einem ähnlich wärmedämmenden Gas gefüllt. Durch Einbringen einer Aussparung in den ersten Materialbereich lässt sich insbesondere bevorzugt die Dichtwirkung des ersten Materialbereiches erhöhen. Weiterhin kann durch gezielte Ausbildung der Geometrie der Aussparung auch das Verformungsverhalten des ersten Materialbereiches optimiert werden und so gemeinsam mit der geradlinigen Ausbildung des Kraftübertragungsabschnitts der Verbindungslinie eine besonders günstige Kraftübertragung vom ersten Materialbereich auf den zweiten Materialbereich erreicht werden. Besonders bevorzugt als Geometrie für die Aussparung im ersten Materialbereich ist eine im Wesentlichen rechteckige Geometrie mit gerundeten Ecken. Auf diese Weise kann eine besonders günstige Spannungsverteilung im Übergangsbereich zwischen dem ersten Materialbereich und dem zweiten Materialbereich erzielt werden.

Weiterhin bevorzugt sind zumindest zwei Aussparungen vorgesehen, wobei eine Aussparung auf halber Strecke zwischen dem Halteabschnitt und der Verbindungslinie angeordnet ist. Die Erstreckung zwischen dem Halteabschnitt und der Verbindungslinie bemisst sich vorzugsweise von dem distalen Ende des Halteabschnitts bis hin zur Verbindungslinie im Bereich des Kraftübertragungsabschnitts. Um eine gleichmäßige Spannungs- und Kraftverteilung im ersten Materialbereich zu erreichen, ist die Aussparung vorzugsweise auf halber Strecke zwischen dem distalen Ende des Halteabschnitts und der Verbindungslinie angeordnet.

Vorzugsweise weist der zweite Materialbereich an seiner der Verbindungslinie gegenüberliegende Seite einen Anlagebereich zur Anlage an einer Scheibe auf, wobei der Anlagebereich wellig ausgebildet ist. Insbesondere bevorzugt weist der Anlagebereich eine im Wesentlichen sinuskurvenförmige Geometrie auf. Auf diese Weise kann der Anlageabschnitt auch bei Schräganlage oder bei nicht perfekt eben ausbildeten Scheiben eine optimale Anlage des zweiten Materialbereiches an der Glasscheibe ermöglichen. Besonders bevorzugt weist dabei ein Wellenberg des Anlagebereiches des zweiten Materialbereiches eine geringere Erstreckung auf als die Dichtlippe oder die Dichtlippen. Auf diese Weise kann gewährleistet werden, dass die Dichtlippen durch ihre größere Erstreckung in Richtung der Glasscheibe oder in Richtung eventuell abzudichtender Wärmebrücken bzw. Hohlräume den Anlagebereich stets gegen äußere Einflüsse abschirmen und so eine besonders makellose Anlage des Anlagebereiches an der Glasscheibe gewährleisten. Es kann auf diese Weise insbesondere verhindert werden, dass Staubkörner oder Flüssigkeiten in den Bereich zwischen dem Anlagebereich und der Glasscheibe gelangen.

In einer besonders bevorzugten Ausführungsform sind der erste und der zweite Materialbereich durch Koextrusion miteinander ausgebildet. Hierdurch lässt sich insbesondere eine Kosteneinsparung erzielen, da die Herstellung des Dichtungsstranges durch Koextrusion besonders zügig geht und auf einfach Weise eine besonders feste Verbindung zwischen dem ersten und dem zweiten Materialbereich herstellt. Darüber hinaus ist eine Zeitersparnis bei der Herstellung erreichbar, wodurch wiederrum Fertigungskosten eingespart werden können. Insbesondere die geradlinige Ausbildung der Verbindungslinie zumindest im Kraftübertragungsabschnitt begünstigt dabei die Herstellung des Dichtungsstranges durch Koextrusion, da besonders einfach Geometrien an den beiden Extrusionsmatrizen vorgesehen werden können. Durch Koextrudieren ist eine besonders hohe Fertigkeit der Verbindung des ersten Materialbereiches mit dem zweiten Materialbereich erreichbar. Besonders die sehr gute Vernetzung beider Materialien trägt hierzu bei.

Weitere Vorteile und Merkmale der vorliegenden Erfindung ergeben sich aus der nachfolgenden Beschreibung mit Bezug auf beigefügte Figuren zu ausgewählten bevorzugten Ausführungsbeispielen. Es versteht sich, dass einzelne in nur einer der Figuren gezeigte Merkmale auch in anderen Ausführungsformen Anwendung finden können, in denen nicht explizit dargestellt sind. Es zeigen:
- Fig. 1: eine Schnittansicht einer bevorzugten Ausführungsform des erfindungsgemäßen Dichtungsstranges;
- Fig. 2: eine weitere Schnittansicht einer bevorzugten Ausführungsform des erfindungsgemäßen Dichtungsstranges; und
- Fig. 3: eine weitere Schnittansicht einer bevorzugten Ausführungsform des erfindungsgemäßen Dichtungsstranges.

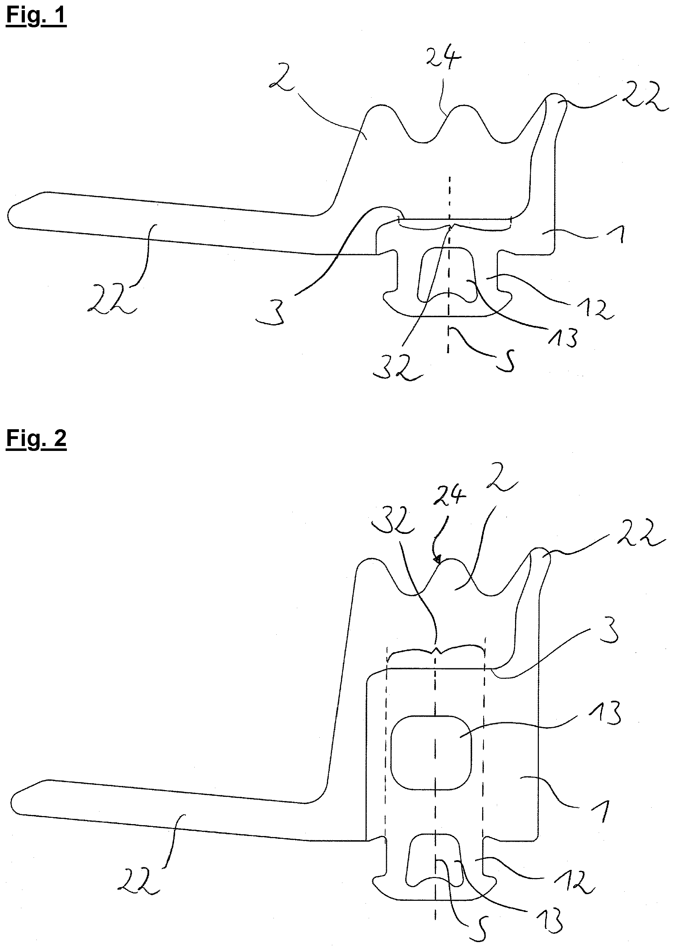

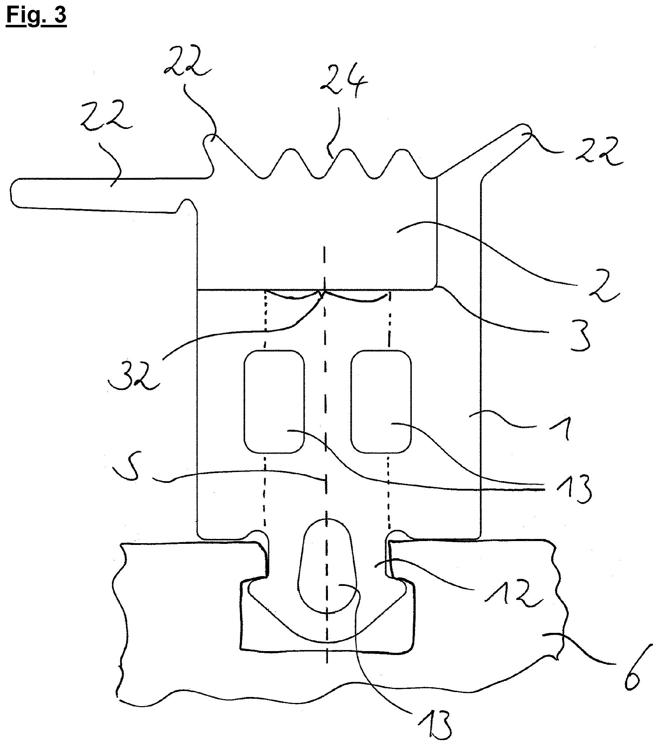

Bei dem in Fig. 1 gezeigten Dichtungsstrang ist ein erster Materialbereich 1 und ein zweiter Materialbereich 2 vorgesehen. Am ersten Materialbereich 1 ist ein Halteabschnitt 12 ausgebildet, welcher zum Eingriff mit einem Rahmen 6 (nicht gezeigt) ausgebildet ist. Der formschlüssige Eingriff mit einer Aussparung in einem Rahmen 6 ist in Fig. 3 gezeigt. Der Halteabschnitt 12 erstreckt sich vorzugsweise symmetrisch zu einer Symmetrielinie S. Vorzugsweise wird in Richtung der Symmetrielinie S auch die Haupthaltekraft vom Halteabschnitt 12 auf den ersten Materialbereich 1 und den zweiten Materialbereich 2 übertragen. Weiterhin bevorzugt wird in Richtung bzw. parallel zu der Symmetrielinie S vorzugsweise der Dichtungsstrang zwischen einer Glasscheibe (nicht gezeigt) und dem Rahmen 6 eingeklemmt. Zwischen dem ersten Materialbereich 1 und dem zweiten Materialbereich 2 ist eine Verbindungslinie 3 angeordnet. Diese Verbindungslinie 3 weist einen Kraftübertragungsabschnitt 32 auf, in welchem die Verbindungslinie 3 im Wesentlichen geradlinig verläuft. Anders formuliert weist die Verbindungslinie 3 im Kraftübertragungsabschnitt 32 bis auf kleinere Rundung in den Eckenbereichen und fertigungsbedingte Materialunebenheiten keine Abweichungen von einer mathematischen Geraden auf. Es versteht sich im vorliegenden Zusammenhang, dass der Kraftübertragungsabschnitt 32 zwar geradlinig ausgebildet ist, aber nicht unbedingt senkrecht zur Symmetrielinie S stehen muss. In den Ausführungsbeispielen in Fig. 1, 2 und 3 sind der Einfachheit halber lediglich solche Ausführungen gezeigt, bei denen der Kraftübertragungsabschnitt 32 im Wesentlichen senkrecht zu der Symmetrielinie S steht. Es versteht sich aber, dass der kleinere zwischen der Symmetrielinie S und dem Kraftübertragungsabschnitt 32 eingeschlossene Winkel im Bereich von 45° bis 89° liegen kann. Auf diese Weise ist es möglich, den Dichtungsstrang insbesondere an Rahmen- und Fenstergeometrien anzupassen, bei denen die Fensterscheibe oder Türscheibe nicht parallel zu der jeweiligen Befestigungsgeometrie am Rahmen ausgebildet ist. Der Kraftübertragungsabschnitt 32 weist dabei vorzugsweise zumindest die Breite des Halteabschnitts 12 auf, mit welcher dieser eine Haltekraft auf das Material des ersten Materialbereiches 1 überträgt. Es kann auf diese Weise eine ungleiche Beanspruchung der Materialien des ersten und des zweiten Materialbereiches 1,2 im Bereich der Verbindungslinie 3, insbesondere im Bereich des Kraftübertragungsabschnitts 32 vermieden werden. Weiterhin weist der Dichtungsstrang eine Dichtlippe 22 auf, die vorzugsweise im Wesentlichen quer zur Symmetrielinie S verläuft. Dabei ist die linke der in Fig. 1 gezeigten Dichtungslippen 22 aus dem Material des zweiten Materialbereiches 2 ausgeführt und die rechte der Dichtungslippen 22 im Wesentlichen aus dem Material des ersten Materialbereiches 1. Weiterhin bevorzugt weist der Dichtungsstrang eine Aussparung 13 auf, welche im vorliegenden Beispiel vorzugsweise im Bereich des ersten Materialbereiches 1 ausgebildet ist. Mit Hilfe der Aussparung 13 lässt sich eine günstige Verformbarkeit des Materials des ersten Materialbereiches 1 im Bereich des Halteabschnitts 12 erzielen, um das Einbringen und Festlegen des Dichtungsstranges an einem Rahmen zu erleichtern.

Fig. 2 zeigt eine weitere bevorzugte Ausführungsform eines Dichtungsstranges in Schnittansicht. Im Unterschied zu der in Fig. 1 dargestellten Ausführungsform ist eine weitere Aussparung 13 im Bereich des ersten Materialbereiches 1 vorgesehen. Diese Aussparung 13 dient insbesondere der Steigerung der Dichtungswirkung des Dichtungsstranges, da sie beispielsweise mit Luft gefüllt sein kann, welche eine wesentlich geringere Wärmeübertragungsfähigkeit aufweist als das Material des ersten Materialbereiches 1. Die weiteren Außengeometrien des Dichtungsstranges, insbesondere die Dichtungslippen 22 sowie der wellig ausgebildete Anlagebereich 24 entsprechen dabei im Wesentlichen der Ausführungsform von Fig. 1.

Fig. 3 zeigt eine weitere bevorzugte Ausführungsform des erfindungsgemäßen Dichtungsstranges in Schnittansicht. Dabei ist vorliegend der Rahmen 6 dargestellt, in welchem der Halteabschnitt 12 des ersten Materialbereiches 1 des Dichtungsstranges formschlüssig in Eingriff gebracht ist. Auch in dieser Ausführungsform weist der erste Materialbereich 1 im Bereich des Halteabschnitts 12 vorzugsweise eine Aussparung 13 auf, die gezielt eine bessere Verformbarkeit des Materials des ersten Materialbereiches 1 in dem Bereich ermöglicht. Weiterhin sind vorzugsweise zwei weitere Aussparungen 13 im ersten Materialbereich 1 vorgesehen, welche die Dichtungswirkung verbessern. Der Kraftübertragungsabschnitt 32 ist, wie auch in den in Fig. 1 und 2 gezeigten Ausführungsformen, vorzugsweise derart angeordnet, dass die Symmetrielinie S den Kraftübertragungsabschnitt 32 halbiert. Auf diese Weise kann eine besonders symmetrische Kraftübertragung im Kraftübertragungsabschnitt 32 stattfinden, welche insbesondere durch die geradlinige Ausbildung der Verbindungslinie 3 im Kraftübertragungsabschnitt 32 begünstigt wird. Bevorzugt ist die Verbindungslinie 3 auch außerhalb des Kraftübertragungsabschnitts 32 geradlinig ausgeführt. Weiterhin ist gezeigt, dass anstelle von nur zwei Dichtungslippen 22 im vorliegenden Fall vorzugsweise drei Dichtungslippen vorgesehen sind, von denen zwei im zweiten Materialbereich 2 ausgebildet sind und eine im ersten Materialbereich 1. Der Anlagebereich 24 ist dabei vorzugsweise wellenförmig ausgebildet. Insbesondere bevorzugt sind die zwei der Aussparungen 13 im ersten Materialbereich 1 auf halber Höhe zwischen dem Halteabschnitt 12 und der Verbindungslinie 3 angeordnet. Dies ist auch für die Ausführungsformen der Figuren 1 und 2 bevorzugt.

### Bezugszeichenliste:

- 1 -: erster Materialbereich
- 2 -: zweiter Materialbereich
- 3 -: Verbindungslinie
- 6 -: Rahmen
- 12 -: Halteabschnitt
- 13. -: Aussparung
- 22 -: Dichtlippe
- 24 -: Anlagebereich
- 32 -: Kraftübertragungsabschnitt
- S -: Symmetrielinie

## Patentansprüche

1. Dichtungsstrang mit einem entlang einer Profilbahn (A) im Wesentlichen gleichbleibenden Querschnitt,
wobei der Dichtungsstrang in einer quer zur Profilbahn (A) liegenden Schnittebene folgendes aufweist:
a) einen ersten Materialbereich (1) mit einem Halteabschnitt (12) zum Eingriff mit einem Rahmen (6), und
b) einen zweiten Materialbereich (2), welcher an der dem Halteabschnitt (12) gegenüber liegenden Seite des ersten Materialbereiches (1) mit diesem verbunden ist,
wobei zwischen dem ersten Materialbereich (1) und dem zweiten Materialbereich (2) eine Verbindungslinie (3) vorgesehen ist, und
wobei die Verbindungslinie (3) einen Kraftübertragungsabschnitt (32) aufweist, in welchem sie im Wesentlichen geradlinig verläuft,
wobei der zweite Materialbereich (2) aus Moosgummi ausgebildet ist, wobei das Moosgummi eine Dichte von 0,3 bis 1,5 g/cm3 aufweist, und wobei der erste Materialbereich (1) eine höhere Festigkeit aufweist als der zweite Materialbereich (2), **dadurch gekennzeichnet, dass** die mittlere Zugfestigkeit des Materials des ersten Materialbereiches (1) ein 4 bis 6-faches der mittleren Zugfestigkeit des Materials des zweiten Materialbereiches (2) ist.

2. Dichtungsstrang nach Anspruch 1,
wobei der Kraftübertragungsabschnitt (32) eine Erstreckung aufweist, die zumindest gleich der Erstreckung des Halteabschnitts (12) parallel zum Kraftübertragungsabschnitt (32) ist.

3. Dichtungsstrang nach einem der vorhergehenden Ansprüche,
wobei der Halteabschnitt (12) im Wesentlichen symmetrisch zu einer Symmetrielinie (S) ausgebildet ist,
wobei der Kraftübertragungsabschnitt (32) derart angeordnet ist, dass die Symmetrielinie (S) den Kraftübertragungsabschnitt (32) halbiert.

4. Dichtungsstrang nach einem der vorhergehenden Ansprüche,
wobei sich die Verbindungslinie (3) auch außerhalb des Kraftübertragungsabschnitts (32) geradlinig erstreckt.

5. Dichtungsstrang nach einem der vorhergehenden Ansprüche,
wobei die Verbindungslinie (3) im Wesentlichen geradlinig verläuft.

6. Dichtungsstrang nach einem der vorhergehenden Ansprüche,
wobei der erste Materialbereich (1) aus einem EPDM .

7. Dichtungsstrang nach einem der vorhergehenden Ansprüche,
wobei am zweiten Materialbereich (2) eine Dichtlippe (22) ausgebildet ist,
wobei die Dichtlippe (22) von dem restlichen Material des zweiten Materialbereiches (2) absteht.

8. Dichtungsstrang nach Anspruch 7 und 3,
wobei die Dichtlippe (22) ihre überwiegende Erstreckung quer zur Symmetrielinie (S) aufweist,

9. Dichtungsstrang nach Anspruch 8,
wobei die Erstreckung der Dichtlippe (22) quer zur Symmetrielinie (S) ein 2-bis 10-faches der anderen Erstreckungsrichtungen der Dichtlippe (22) beträgt.

10. Dichtungsstrang nach einem der vorhergehenden Ansprüche,
wobei eine Vielzahl von Dichtungslippen (22) am ersten Materialbereich (1) und/oder am zweiten Materialbereich (2) ausgebildet ist.

11. Dichtungsstrang nach einem der vorhergehenden Ansprüche,
wobei der erste Materialbereich (1) eine Aussparung (13) aufweist, welche vorzugsweise im Halteabschnitt (12) vorgesehen ist.

12. Dichtungsstrang nach Anspruch 11,
wobei zumindest zwei Aussparungen (13) vorgesehen sind,
wobei eine Aussparung (13) auf halber Strecke zwischen dem Halteabschnitt (12) und der Verbindungslinie (3) angeordnet ist.

13. Dichtungsstrang nach einem der vorhergehenden Ansprüche,
wobei der zweite Materialbereich (2) an seiner, der Verbindungslinie (3) gegenüber liegenden Seite einen Anlagebereich (24) zur Anlage an einer Scheibe aufweist,
wobei der Anlagebereich (24) wellig ausgebildet ist.

14. Dichtungsstrang nach einem der vorhergehenden Ansprüche,
wobei der erste und der zweite Materialbereich (1, 2) durch Koextrusion miteinander ausgebildet sind.

## Claims

1. A sealing strand having a cross-section which is substantially constant along a profiled web (A), the sealing strand having the following in a sectional plane extending transversely to the profiled web (A):
a) a first material region (1) having a holding portion (12) for engaging a frame (6), and
b) a second material region (2), which is connected to the first material region (1) on the side opposite to the holding portion (12),
wherein a connecting line (3) is provided between the first material portion (1) and the second material portion (2), and wherein the connecting line (3) has a force transmission portion (32) in which it extends substantially linearly, the second material region (2) being formed from cellular rubber, and the cellular rubber having a density of 0.3 to 1.5 g/cm³, and the first material region (1) having a higher strength than the second material region (2), **characterized in that** the mean tensile strength of the material of the first material region (1) is 4 to 6 times the mean tensile strength of the material of the second material region (2).

2. The sealing strand according to claim 1,
wherein the force transmission section (32) has an extension, which is at least equal to the extension of the holding portion (12) parallel to the force transmission portion (32).

3. The sealing strand according to one of the preceding claims,
wherein the holding portion (12) is formed substantially symmetrically to a symmetry line (S),
wherein the force transmission portion (32) is arranged such that the symmetry line (S) halves the force transmission portion (32).

4. The sealing strand according to one of the preceding claims,
wherein the connecting line (3) also extends in a straight line outside the force transmission portion (32).

5. The sealing strand according to one of the preceding claims,
wherein the connecting line (3) runs substantially straight.

6. The sealing strand according to one of the preceding claims,
wherein the first material region (1) is made of an EPDM .

7. The sealing strand according to one of the preceding claims,
wherein a sealing lip (22) is formed on the second material region (2),
wherein the sealing lip (22) projects from the remaining material of the second material region (2).

8. The sealing strand according to claim 7 and 3,
wherein the sealing lip (22) has its predominant extension transverse to the symmetry line (S).

9. The sealing strand according to claim 8,
wherein the extension of the sealing lip (22) transverse to the symmetry line (S) is 2 to 10 times that of the other directions of extension of the sealing lip (22).

10. The sealing strand according to one of the preceding claims,
wherein a plurality of sealing lips (22) is formed on the first material region (1) and/or on the second material region (2).

11. The sealing strand according to one of the preceding claims,
wherein the first material region (1) has a recess (13) which is preferably provided in the holding portion (12).

12. The sealing strand according to claim 11,
wherein at least two recesses (13) are provided,
wherein a recess (13) is arranged halfway between the holding portion (12) and the connecting line (3).

13. The sealing strand according to one of the preceding claims,
wherein the second material region (2) has on its side opposite the connecting line (3) an abutment region (24) for abutment against a disc,
wherein the abutment region (24) is wavy.

14. The sealing strand according to one of the preceding claims,
wherein the first and second material regions (1, 2) are formed by coextrusion with each other.

## Revendications

1. Cordon d'étanchéité présentant une section transversale sensiblement constante le long d'une bande profilée (A),
dans un plan de coupe situé transversalement à la bande profilée (A), le cordon d'étanchéité comprend ce qui suit :
a) une première zone de matériau (1) comprenant une portion de retenue (12) pour l'engagement avec un cadre (6), et
b) une seconde zone de matériau (2) qui est reliée à la première zone de matériau (1) sur le côté de celle-ci opposé à la portion de retenue (12), une ligne de liaison (3) étant prévue entre la première zone de matériau (1) et la seconde zone de matériau (2), et
la ligne de liaison (3) présentant une portion de transmission de force (32) dans laquelle elle s'étend sensiblement en ligne droite,
la seconde zone de matériau (2) étant réalisée en caoutchouc mousse, le caoutchouc mousse présentant une densité de 0,3 à 1,5 g/cm³, et
la première zone de matériau (1) présentant une solidité supérieure à celle de la seconde zone de matériau (2),
**caractérisé en ce que**
la résistance moyenne à la traction du matériau de la première zone de matériau (1) est de 4 à 6 fois la résistance moyenne à la traction du matériau de la seconde zone de matériau (2).

2. Cordon d'étanchéité selon la revendication 1,
dans lequel
la portion de transmission de force (32) présente une extension qui est au moins égale à l'extension de la portion de retenue (12) parallèlement à la portion de transmission de force (32).

3. Cordon d'étanchéité selon l'une des revendications précédentes,
dans lequel
la portion de retenue (12) est réalisée sensiblement symétrique à une ligne de symétrie (S), et
la portion de transmission de force (32) est disposée de telle sorte que la ligne de symétrie (S) divise en moitié la portion de transmission de force (32).

4. Cordon d'étanchéité selon l'une des revendications précédentes,
dans lequel
la ligne de liaison (3) s'étend en ligne droite également à l'extérieur de la portion de transmission de force (32).

5. Cordon d'étanchéité selon l'une des revendications précédentes,
dans lequel
la ligne de liaison (3) s'étend sensiblement en ligne droite.

6. Cordon d'étanchéité selon l'une des revendications précédentes,
dans lequel
la première zone de matériau (1) est en EPDM.

7. Cordon d'étanchéité selon l'une des revendications précédentes,
dans lequel
une lèvre d'étanchéité (22) est réalisée au niveau de la seconde zone de matériau (2), la lèvre d'étanchéité (22) faisant saillie du reste du matériau de la seconde zone de matériau (2).

8. Cordon d'étanchéité selon la revendication 7 et 3,
dans lequel
la lèvre d'étanchéité (22) présente sa majeure extension transversalement à la ligne de symétrie (S).

9. Cordon d'étanchéité selon la revendication 8,
dans lequel
l'extension de la lèvre d'étanchéité (22) transversalement à la ligne de symétrie (S) est de 2 à 10 fois les extensions de la lèvre d'étanchéité (22) dans les autres directions.

10. Cordon d'étanchéité selon l'une des revendications précédentes,
dans lequel
une multitude de lèvres d'étanchéité (22) sont réalisées au niveau de la première zone de matériau (1) et/ou de la seconde zone de matériau (2).

11. Cordon d'étanchéité selon l'une des revendications précédentes,
dans lequel
la première zone de matériau (1) présente une échancrure (13) qui est prévue de préférence dans la portion de retenue (12).

12. Cordon d'étanchéité selon la revendication 11,
dans lequel
il est prévu au moins deux échancrures (13), une échancrure (13) étant disposée à mi-chemin entre la portion de retenue (12) et la ligne de liaison (3).

13. Cordon d'étanchéité selon l'une des revendications précédentes,
dans lequel
sur son côté opposé à la ligne de liaison (3), la seconde zone de matériau (2) présente une zone d'appui (24) pour s'appuyer contre une vitre, et
la zone d'appui (24) est réalisée sous forme ondulée.

14. Cordon d'étanchéité selon l'une des revendications précédentes,
dans lequel
la première et la seconde zone de matériau (1, 2) sont réalisées par co-extrusion mutuelle.
